# FASCICULE DE BREVET EUROPEEN

(11) **EP 0 422 552 B1**
(45) Date de publication et mention de la délivrance du brevet: **20.04.1994**
(21) Numéro de dépôt: 90119248.4
(22) Date de dépôt: 08.10.1990
(51) Int. Cl.: G03H 1/00, G02B 27/48

(54) **Procédé d'enregistrement et de restitution visuelle d'une scène tridimensionnelle**
Visuelles Wiedergabe- und Aufzeichnungsverfahren eines dreidimensionalen Bildes
Method for recording and visual reproduction of a 3-D scene

(30) Priorité: 11.10.1989 LU 87606
(43) Date de publication de la demande: 17.04.1991
(73) Titulaire: COMMUNAUTE ECONOMIQUE EUROPEENNE (CEE), L-2920 Luxembourg (LU)
(72) Inventeur: Grossetie, Jean-Claude, I-21027 Ispra (VA) (IT); Franchi, Marco, I-21027 Ispra (VA) (IT)
(74) Mandataire: Weinmiller, Jürgen

(56) Documents cités:
- P. HARIHARAN: "Optical Holography: Principles, Techniques and Applications", 1984, Cambridge University Press, ISBN 0521243483
- APPL. OPT., vol. 27, no. 12, 15 juin 1988, pages 2370-2371, NY, US; M. TRIVI et al.: "Three-dimensional display through speckle patterns: a single exposure method"
- APPL. OPT., vol. 22, no. 6, mars 1983, pages 881-885, NY, US; H.J. RABAL et al.: "Stereograms through a speckle carrier"

## Description

L'invention se réfère à un procédé d'enregistrement photographique et de restitution visuelle d'une scène tridimensionnelle à l'aide d'une source de lumière cohérente.

On connaît des procédés de ce type, qui sont dénommés procédés holographiques. On enregistre sur une plaque photosensible des franges d'interférence entre un faisceau de référence et la lumière diffuse provenant de la scène. A la restitution, on illumine l'hologramme par une source cohérente et on observe l'image de la scène visible derrière l'hologramme. Ici, le champ de vision de la scène est dépendant de l'angle d'observation et de la distance à laquelle on l'observe.

L'invention a pour but de présenter un procédé d'enregistrement photographique et de restitution visuelle d'une scène permettant de reconstituer le champ de vision de la scène lors de la restitution indépendamment de l'angle d'observation et de la distance à laquelle on l'observe.

Ce but est atteint selon l'invention par le procédé tel que défini dans la revendication 1. En ce qui concerne des exemples de mise en oeuvre préférés de ce procédé, référence est faite à la sous-revendication.

L'invention fait usage d'un phénomène que M. Françon a décrit dans un livre "La granularité laser (speckle) et ses applications en optique", édition Masson 1978. Ce phénomène de granularité observé sur une plaque photographique impressionnée par une source cohérente est en général considéré comme un phénomène gênant et perturbateur. C'est pourquoi on s'attache à l'éliminer aussi bien dans les montages photographiques que dans les montages holographiques. Il a été trouvé de façon surprenante qu'en illuminant par une source cohérente seulement un élément très étroit de la surface de la scène lors de l'enregistrement, on enregistre, sur une plaque photographique et sous forme de speckles, toutes les informations non seulement à propos de cet élément, mais aussi à propos de tous les objets éclairés de façon secondaire. En fait, ces objets reçoivent, eux aussi, la lumière diffuse et la retransmettent de nouveau vers l'environnement.

L'invention sera décrite ci-après plus en détail à l'aide de trois figures.
La figure 1 représente schématiquement la configuration entre une source cohérente, la scène et la plaque photographique lors de l'enregistrement,
la figure 2 donne l'aspect d'une plaque photographique telle qu'elle se présente à l'oeil après l'enregistrement d'une scène,
la figure 3 indique schématiquement la configuration entre la source cohérente, la plaque photographique et l'observateur lors de la restitution visuelle de la scène.

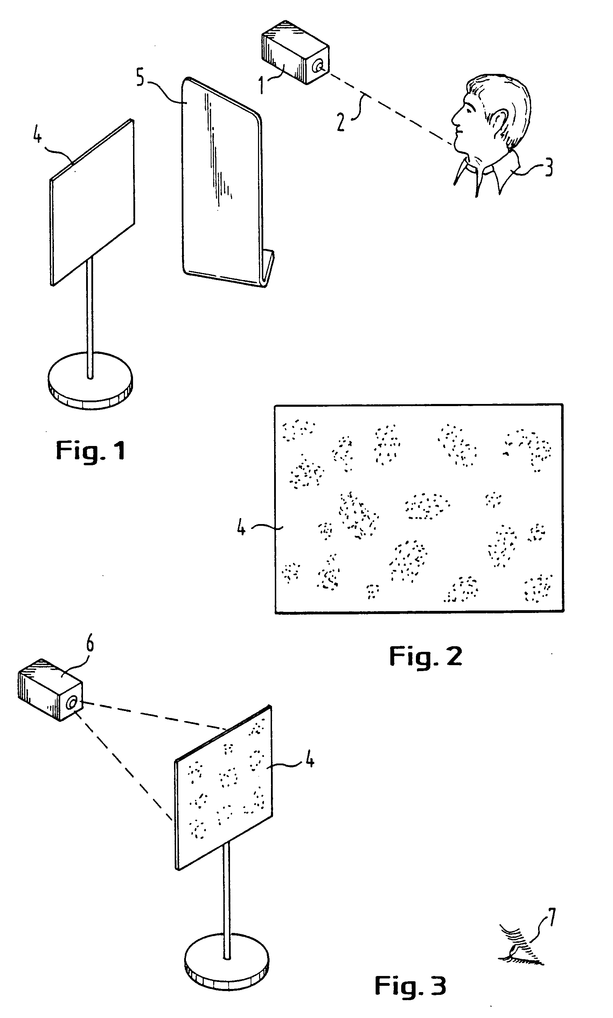

En se référant à la figure 1, on voit une source cohérente de lumière 1 constituée par un laser qui émet un pinceau fin 2 vers un objet 3, dont l'image doit être enregistrée. Le diamètre du pinceau 2 est volontairement très réduit, par exemple quelques dizièmes de millimètre, et illumine donc un élément très étroit de la scène 3. Une plaque photographique 4 est positionnée pour recevoir la lumière réfléchie de la scène 3. Un écran 5 sert à éviter le passage direct de la lumière entre le laser 1 et la plaque photographique 4.

En fonction de la rugosité de l'élément de la scène frappé par le pinceau 2, une quantité plus ou moins grande de l'énergie du pinceau cohérent est diffusée vers les autres parties de la scène et vers l'espace environnant. On constate alors que la plaque photographique est impressionnée suivant un mode très particulier. On observe en effet (voir figure 2) des taches plus ou moins foncées de tailles variables et de répartition qui paraît a priori également aléatoire. On appelle ce phénomène un speckle.

Il faut signaler ici qu'il existe une différence fondamentale entre des hologrammes classiques et des speckles selon la présente invention. En effet, jusqu'à présent, on a cherché à uniformiser le plus possible le faisceau illuminant la scène pour illuminer de la même façon tous les éléments de la scène. Ici, au contraire, on cherche à concentrer au maximum le faisceau incident et à obtenir une répartition d'intensité la plus hétérogène possible. Par conséquent, ce n'est plus la scène entière qui reçoit la lumière incidente, mais une très petite portion de celle-ci.

En prenant une plaque photographique 4, impressionnée comme le montre la figure 2, et en éclairant cette plaque 4 par une source cohérente de lumière 6, un observateur 7 constate que la lumière est diffractée après avoir traversée la plaque et reconstitue la totalité de la scène tridimensionnelle d'origine. Lors de l'observation de cette image, on constate que le champ optique reconstitué donne une vision évolutive de la scène. Au contraire des hologrammes, le champ de vision de la scène dépend de l'angle d'observation et de la distance à laquelle on l'observe. Quel que soit la direction choisie pour l'observation, on obtient toujours une vision de l'ensemble. De plus, suivant la distance d'observation par rapport à la plaque 4, on constate que le champ de vision de la scène se modifie (il s'agrandit ou se rétracte), ce qui est impossible de faire avec les hologrammes classiques. En outre, on observe que l'image observée ne change pas son aspect lorsqu'on cache la moitié ou plus de la plaque photographique.

Ces propriétés exceptionnelles pourraient être expliquées à l'aide de la théorie de diffraction vectorielle.

L'étude au microscope du contraste de transparence entre les taches (voir figure 2) a permis de découvrir que la structure interne des éléments sombres et clairs est l'analogue de micro-hologrammes locaux. Ces micro-hologrammes forment une suite continue et évolutive sur toute la surface sensible de la plaque.

Comme les hologrammes classiques, les micro-hologrammes forment un réseau continu de courbes sombres et claires qui se superposent aux taches du speckle. Bien entendu, ces courbes ne sont autre chose que l'enregistrement de champs continus d'interférence liés à la fois à l'élément de surface sur lequel le pinceau laser incident est concentré lors de l'enregistrement, et à la scène spatiale qui reçoit et réémet la lumière cohérente.

On peut donc constater qu'au phénomène de granularité laser est toujours associé un ensemble de champs continus d'interférence qui se superposent à la granularité laser proprement dite. Ce phénomène n'a pas été mis en évidence jusqu'ici, car on utilisait jusqu'ici des pinceaux lumineux très larges permettant d'illuminer toute la scène. Dans ces conditions, la sensibilité des plaques est inadaptée et de plus, les rapports d'intensité entre les phénomènes sont d'un ordre de grandeur entre eux. Avec l'illumination par un pinceau très fin, tel qu'il est proposé selon la présente invention, on constate que l'interaction entre le pinceau et ledit élément de la scène produit sur la surface elle-même et à son voisinage un champ localisé d'interférences. La structure locale de ces interférences est fonction de la rugosité locale de la scène, et les micro-zones d'intensité non nulle se comportent comme autant de sources cohérentes. Le nombre de ces sources secondaires est très important et varie en fonction du nombre d'aspérités microscopiques de la surface en question. En conséquence, on peut conclure que le fait de concentrer un pinceau de lumière cohérente sur une infime portion arbitraire de la surface de la scène conduit à ce que l'espace environnant est illuminé simultanément par une multitude de sources quasi ponctuelles cohérentes, dont les intensités équivalentes d'émission sont quasi identiques. Ce fait fondamental permet de comprendre en grande partie pourquoi on peut enregistrer en même temps le speckle créé par toutes les sources et tous les hologrammes qui proviennent de toutes les combinaisons optiques possibles.

L'ensemble des ces micro-hologrammes forme un réseau continu d'interférences qui constitue de fait une codification naturelle de la scène.

Ainsi, à une scène tridimensionnelle, on peut associer d'une façon bi-univoque un réseau plan particulier d'interférences. Le stockage, la création, la reconstitution et le transfert sous forme analogique ou numérique des courbes qui forment ce réseau permet donc de travailler sur une représentation codifiée très compacte d'une scène spatiale et non plus, comme c'est le cas actuellement, sur des représentations d'images, qui sont par définition planes.

D'ores et déjà, on peut évaluer que la codification ainsi obtenue représente un gain important par rapport à l'état actuel de la technique et que ce gain est au moins de l'ordre de grandeur de 100.000. Le procédé selon l'invention présente des avantages techniques importants et permet en particulier de s'affranchir des problèmes de vibration, de convection naturelle et de stabilité des supports mécaniques. Il faut aussi souligner qu'il n'y a plus de faisceau de référence comme dans la technique holographique.

Enfin, et cela semble être très important, ce phénomème s'avère posséder toutes les propriétés intrinsèques de la vision naturelle.

Ainsi, le procédé selon l'invention se prête à des applications multiples tant scientifiques qu'industrielles ou artistiques.

## Revendications

1. Procédé d'enregistrement photographique et de restitution visuelle d'une scène tridimensionnelle (3) à l'aide d'une source de lumière cohérente (1,6), caractérisé en ce que, pour l'enregistrement photographique, on projette un pinceau (2) de lumière cohérente sur ladite scène de sorte qu'il n'illumine qu'un élément étroit diffusant de la surface de la scène et qu'une fraction de la lumière est diffusée vers d'autres parties de la scène, qu'on place une plaque (4) photosensible d'enregistrement de telle sorte qu'elle reçoit de la lumière diffuse provenant de ladite scène (3), et que, pour la restitution visuelle, on illumine une première face de ladite plaque (4) par un faisceau de lumière cohérente et on observe l'image reconstituée du côté de la seconde face de ladite plaque (4).

2. Procédé selon la revendication 1, caractérisé en ce que cet élément étroit de la surface de la scène a une taille d'environ 10⁻⁷m².

## Claims

1. A method for photographically recording and visually restituting a tridimensional scene (3) by means of a coherent light source (1, 6), characterized in that, in view of the photographic recording, a coherent light beam (2) is projected onto said scene so that it illuminates only a small diffusing portion of the surface of the scene and that a fraction of the light is diffused towards other portions of the scene, that a photosensitive recording plate (4) is disposed in such a way that it receives diffuse light coming from said scene (3), and that, in view of the visual restitution, a first face of said plate (4) is illuminated by a coherent light beam and the reconstituted image is observed from the side of the second face of said plate (4).

2. A method according to claim 1, characterized in that this small portion of the surface of the scene has a size of about 10⁻⁷m².

## Patentansprüche

1. Verfahren zur fotographischen Aufnahme und visuellen Wiedergabe einer dreidimensionalen Szene (3) mit Hilfe einer kohärenten Lichtquelle (1, 6), dadurch gekennzeichnet, daß man zum fotographischen Aufnehmen einen dünnen kohärenten Lichtstrahl (2) auf die betreffende Szene projiziert, derart, daß er nur ein kleines lichtstreuendes Element der Oberfläche der Szene beleuchtet und daß ein Teil des Lichtes auf andere Bereiche der Szene gesteuert wird, daß man eine lichtempfindliche Aufnahmeplatte (4) derart anordnet, daß sie das von der Szene (3) kommende diffuse Licht empfängt und daß man zur visuellen Wiedergabe eine erste Seite der Platte (4) durch einen kohärenten Lichtstrahl beleuchtet und das wiedergegebene Bild von der zweiten Seite der Platte (4) her betrachtet.

2. Verfahren nach Anspruch 1, dadurch gekennzeichnet, daß das kleine Element der Oberfläche der Szene eine Größe von etwa 10⁻⁷m² besitzt.
